# EUROPEAN PATENT SPECIFICATION

(11) **EP 2 735 533 B1**
(45) Date of publication and mention of the grant of the patent: **03.05.2017**
(21) Application number: 13193743.5
(22) Date of filing: 21.11.2013
(51) Int. Cl.: B65G 57/14, B65G 57/18

(54) **Arrangement for the transfer of layers of timber**
Vorrichtung für den Transfer von Holz
Agencement pour le transfert de couches de bois

(30) Priority: 22.11.2012 SE 1251323
(43) Date of publication of application: 28.05.2014
(73) Proprietor: Renholmen AB, 930 47 Byske (SE)
(72) Inventor: Lundmark, Tobias, 931 98 Skellefteå (SE)
(74) Representative: Zacco Sweden AB

(56) References cited:
- US-A- 4 290 723
- US-A1- 2003 082 043
- US-A1- 2005 106 000

## Description

The present invention concerns an arrangement for the transfer of layers of timber from an input transporter to a stacking table that can be raised and lowered, in order to form a stack of timber according to the preamble of claim 1.

During the layerwise stacking of sawn timber, layers of collected pieces of timber are transferred from an input transporter to a stacking lift by means of a transfer arrangement that consists of a number of support planes that are mobile in a cyclic path and that perform reciprocating motion after each other. A stack of timber is thus formed by a number of layers of timber laid on top of each other. The stacking lift is arranged to descend according to a program at the rate at which the layers of the stack are placed onto each other such that space is made available for the transfer of subsequent layers. Stacking laths are normally placed between the layers in order to promote drying of the stack.

A drive arrangement ensures that the support planes move cyclically in a manner in which they lift from below layers of pieces of timber from the input transporter and transport the layer in an essentially horizontal direction in over the lift arrangement. A lifting mechanism that is a component of the drive arrangement subsequently ensures that the support planes move a distance downwards in order finally to be withdrawn while the layer of timber is scraped off from the support plane. A retention means that is arranged at the lift arrangement acts as a counterpiece against one edge of the layer and retains that layer over the lift arrangement while the transfer arms are withdrawn. Each support plane is formed from a number of deposit arms that perform reciprocating motion next to each other, designed as a number of parallel swords or fingers evenly distributed in the longitudinal direction of the pieces of timber that, supported by a carriage, can be displaced along a rail that is associated to each deposit arm. The deposit arms that lie next to each other are arranged in known transfer arrangements to be located at the same height as each other during the complete transfer cycle.

It is well known for all those skilled in the arts that sawn pieces of timber are never identical, and that they can demonstrate various types of shape-based faults. As a result, stacks of timber that are formed will not either demonstrate the desired perfect rectangular form: they also will be endowed with many types of shape-based faults. The upper surface of the stack of timber, for example, or its upper edges may tilt or be oblique in some direction such that the upper surface of the stack of timber deviates from an ideally plane surface. Combinations of the said shape-based faults may, of course, occur. This type of randomly appearing shape-based fault limits, of course, the ability of the transfer arrangement to transfer in a safe and efficient manner a new layer of pieces of timber in over and down onto the most recently placed layer of timber on the stack. The said limitations that are referred to are, for example, that the margins of motion between the support plane that is a component of the transfer arrangement and the upper part of the stack of timber that has been formed must be sufficient in order to offer such a margin of safety that any risk of disturbance due to undesired contact between the support plane and the layer of timber on the stack can be avoided. It is, however, not desirable to increase the margins of motion since this has a negative influence on the capacity of the stacker. It should be understood that transport paths and motion paths that are as short as possible are something that every designer aspires to, not least due to the forces that act on transfer arms in motion. Due to the said randomly appearing shape-based faults in the upper part of the stack of timber there is always a risk that any one piece of timber in the upper part of the stack of timber will become stuck and will accompany the deposit arms of the support plane when these are withdrawn from the stack of timber, whereby pieces of timber in the layer risk tipping or becoming disorganised.

From US 4 290 723 is known an arrangement for the transfer of layers of timber according to the preamble of claim 1. Rising and lowering of the deposit arm is achieved by a lifting arm having a lifting mechanism which, comprised of a lifting cylinder, is immediate coupled to the lifting arm.

One purpose of the present invention, therefore, is to achieve an arrangement for the transfer of layers of timber that makes it possible to eliminate the problems that can arise in cases in which the stack of timber that has been formed demonstrates shape-based faults. A second purpose of the invention is to achieve an arrangement that makes it possible to increase the capacity of a stacker. These first two purposes of the invention are solved through a transfer arrangement for layers of timber that has been given the distinctive features and characteristics specified in claim 1.

The insight that forms the basis of the invention is that a support plane that is self-adjusting and that can adapt to such variations in shape that can form in a stack of timber is obtained through making it possible for each one of the deposit arms that are located next to each other that together form a support plane to take up, during that part of the motion cycle during which the support plane and thus the layer of timber that is supported by the support plane and that is lowered down onto the upper surface of a stack of timber for deposit, a form of "floating condition" by being freed from the coupling of motion with the lifting mechanism in such a manner that any one of the deposit arms is stopped in its downwards motion on contact with a raised part of the upper surface of the stack of timber at the same time as the lifting mechanism and deposit arms that lie even with it are allowed to continue their downwards motion. When the lifting mechanism has reached a pre-determined lower position the deposit arms are again placed into power-transmitting coupling with the lifting mechanism, after which the deposit arms are withdrawn from the stack of timber.

The invention will be described in more detail below with reference to the attached drawings, of which:

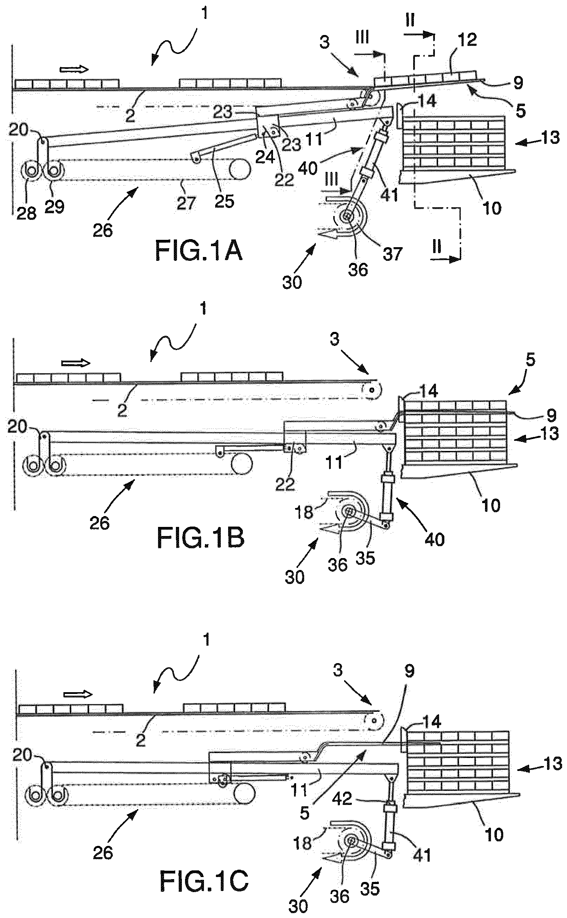

Figures 1A-1C show schematically a side view of an arrangement for the transfer of layers of timber according to the invention at different conditions of working stages that are carried out during a stacking cycle and the transfer of layers of timber from an input transporter to a lift arrangement on which layers placed on top of each other place form a stack of timber;

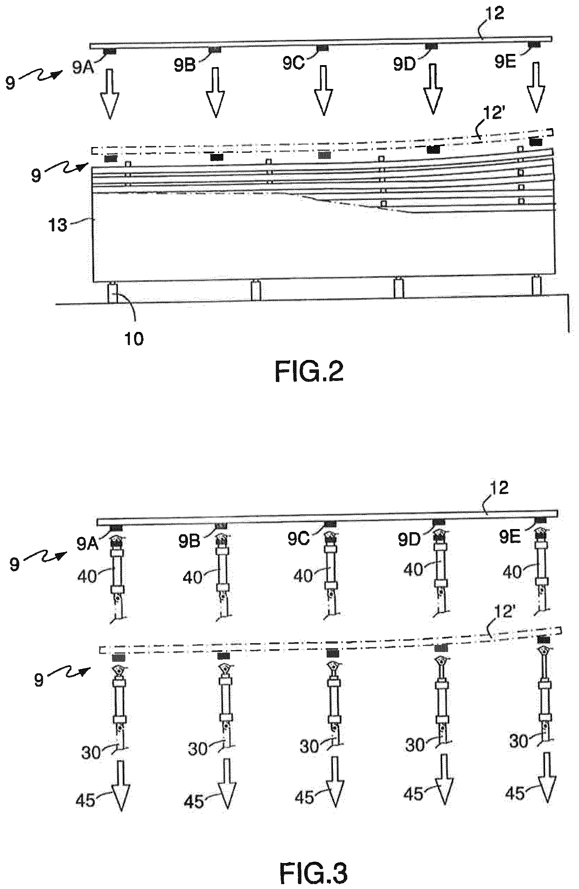

Figure 2 shows schematically a view in cross-section of the arrangement according to the invention viewed along the line II-II in Figure 1A and in a condition during the deposition of a layer of timber onto a stack of timber that is under construction, where the stack of timber deviates at its top from an ideal desired form in that it demonstrates an elevation at its right rear edge;
Figure 3 shows schematically a view in cross-section of the arrangement according to the invention viewed along the line III-III in Figure 1A and illustrating how a release arrangement that is a component of the present invention consisting of a lifting cylinder with a piston that can be locked in its freed position allows the deposit arms to be self-adjusting by being stopped when in contact with the upper surface of the stack of timber at the same time as the lifting mechanism continues it motion downwards.

An input transporter on which pieces of timber are fed forwards in their transverse direction on chains 2 is generally denoted in the drawings by 1. In direct association with the output end of the input transporter 1, which is denoted by 3, are shown a number of similar support planes 5 that are individually mobile and that move in a sequence one after the other. Each such support plane 5 is arranged by means of parallel deposit arms 9 that lie next to each other to move cyclically along a pathway in a sequence one after the other, where each plane functions as a transfer arrangement between the output end 3 of the input transporter 1 and a lift arrangement 10 that is a component of the packager. A programme unit or computer, not shown in the drawings, is arranged to control and monitor the motions of the various units.

Figures 1A-1C show schematically a side view of an arrangement according to the invention in the various working stages that are carried out during one stacking cycle for the transfer of a layer of pieces of timber from the input transporter 1 to the lift arrangement 10. Since the series of mobile support planes 5 that move cyclically one after the other and that are components of the present transfer arrangement are identical, only the function and design of a single one of these and its associated drive system will be described in detail, for reasons of simplicity.

Figure 1A shows the support plane 5 in a first condition of its cyclical motion during which a layer 12 is in the process of being constructed on the same directly from the input transporter 1. As soon as a pre-determined number of pieces of timber has been transferred onto the deposit arms 9 of the support plane 5, which takes place with the aid of the carriers 2 of the input transporter 1, the support plane 5 is set in forward motion along its rails 11 and in over a stack of timber 13 that it is intended shall, eventually, be constructed on the lift arrangement 10.

Figure 1B shows the support plane 5 in a second condition of its cyclical motion whereby the support plane has been lowered to a position above the stacking table 8 and the stack of timber 13 that has been formed, such that the most recently added layer of timber in the layer is located with its outer edge somewhat to the side of a counterpiece 14 at the lift arrangement 10.

Figure 1C shows the support plane 5 in a third condition of its cyclical motion during withdrawal of the layer, whereby the support plane is located in a condition in which it is withdrawn from the stack of timber 13 and displaced backwards on the rails 11 to an initial condition under the input transporter 1.

Again with reference to Figures 1A-1C, each carrier plane 5 is formed from a number of deposit arms 9 that lie beside each other (see also Figure 2) that are arranged such that they can be displaced, each along a rail 11 that is arranged such that it can be pivoted around a point 20, and the arms are supported by the relevant rail 11 each by its carriage 22 with at least two running wheels 23 on the upper surface of the associated rail and with at least one counter-wheel 24 on the lower side of the same rail. In order to arrange the movement of the carriage 22, and thus also of the deposit arm 9 along the rail 11, the carriage 22 is united through a link 25 to a drive mechanism 26 that comprises an endless chain 27 or similar and that is arranged around the chain wheels 28, one of which is fixed connected to a drive shaft 29. This drive shaft 29 forms part of a drive mechanism 26 that is common for all support planes 5 that move cyclically along a pathway. With respect to the support plane 5, all deposit arms 9 for the said support plane are intended to be displaced in a synchronous manner forwards and backwards on the said relevant rail 11. For raising and lowering of the support plane 5, the rails 11 can be pivoted around their common pivot point 20 by means of a lifting mechanism 30 that comprises an excentric arm 35 that is attached for the execution of lifting and lowering mounted at the rail 11 at an axis 36 and is assigned rotatory motion from a driving wheel 37, which driving wheel in turn receives motion from a drive chain 18, only partially suggested in the drawings. The axis 36 is common for each one of the mechanisms that act to raise and lower the relevant rail 11 for the deposit arms 9 in a support plane 5. If Figures 2 and 3, in particular, are studied in more detail, the latter should be realised, i.e. that the lifting mechanism 30 comprises one lifting unit for each rail 11 with the task of creating raising and lowering motion for the deposit arm 9 that can be displaced along the rail 11. As is shown in Figure 2, a number of deposit arms 9 lying next to each other form with their associated rails 11 the said support plane 5. Other support planes not shown in the drawings are, of course, designed in the same manner.

The technology described above constitutes essentially prior art technology.

The present invention differs from the prior art technology in that it comprises a release arrangement 40 arranged at each deposit arm 9, which release arrangement consists of a pneumatic lifting cylinder 41 with an associated piston rod lock 42, which forms in this way a reset means by which the release arrangement can be driven between a free tensioned condition and a locked transport condition. A pneumatically driven lifting cylinder 41 functions excellently as a tensioning means whereby the tension force (the inner pressure force of the cylinder) that appears can be varied by the selection of a suitable pressure of the medium connected to that side of the lifting cylinder that is placed under pressure during lifting, generally known as the "positive side".

The lifting cylinder 41 is coupled for motion with the lifting mechanism 30 and constructed to be driven between a lower transport condition, relative to the lifting mechanism, in which the deposit arm 9 allows transfer of a layer of pieces of timber from the input transporter to the lift arrangement 10, an upper tensioned condition in which the deposit arm 9 is "floating" in its direction of lift relative to the lifting mechanism 30 and in which it can be driven downwards towards the lifting mechanism when the pressure force that medium offers is overcome, and a holding condition that can be taken at any position at all along the stroke length of the lifting cylinder 41 and in which holding condition the piston rod is locked to the cylinder and thus also to the deposit arm 9 in its direction of lift relative to the lifting mechanism. With the release arrangement 40 set into the upper tensioned condition, the pressure of the medium that is led into the positive side of the lifting cylinder so selected that when the deposit arm 9 is not under load, i.e. when it does not carry a load of pieces of timber, the lifting cylinder provides a lifting power that is sufficient to lift the deposit arm 9 to an upper end position relative to the lifting mechanism 30. With the release arrangement 40 set into its freeing tensioned condition, any one of the deposit arms 9 can be prevented from carrying out its lowering motion on contact with the upper surface of the stack of timber while the lifting mechanism continues its lowering motion.

As is made most clear by Figures 1A-1C, the lifting cylinder 41 with the piston rod lock 42 is so located that it acts between the free end of a rail 11 and the excentric arm 35 of the lifting mechanism 30. The piston rod lock 42 includes, in what is actually a known manner, a spring-loaded compression element that is arranged to lock the piston rod in its axial direction by friction-based interaction with the same. The piston rod lock 42 can be released with an activation means that can be set through a pressurised medium. As a consequence of the compression element, the piston rod can be locked in any freely chosen position of extension along its axis. As soon as a pressurised medium is supplied, the compression element releases its friction-based interaction with the piston rod and the piston-cylinder arrangement can return to its desired condition. This may be, for example, a compressed condition, i.e. an initial condition. This type of arrangement has been known for a long time, for example of manufacture SMC, type C95N B50-100-D, and it will therefore not be described in more detail.

As has been mentioned above, the deposit arm 9 can, by choice of a suitable medium pressure at the positive side of the lifting cylinder 41, be released from exerting any force onto a piece of timber against which it has been stopped during its lowering towards the stack of timber. The medium pressure is so selected that the pressure force of the lifting cylinder 41 in the lifting direction of the lifting mechanism overcomes the deadweight of the deposit arm 9 as soon as the deposit arm has been freed from the weight of the layer of timber 12. In other words, this takes place as soon as the layer of timber has been put down and is resting on stacking laths on the stack of timber 13.

With reference to Figures 2 and 3 in particular, the arrangement functions in the following manner:
Figure 2 shows a support plane 5 that, formed as a series of five parallel deposit arms 9A-9E together, supports a layer of timber 12 intended to be placed onto a stack of timber 13. During loading with the support plane in association with the output end 3 of the input transporter 1 the lifting cylinders 41 of the release arrangement 40 are located in their lower transport condition. The deposit arm 9 in this condition is locked in its direction of lowering relative to the lifting mechanism 30. When all pieces of timber required to form a layer have been loaded, the lifting cylinders 41 of the release arrangement 40 are reset to their upper tensioned condition. The deposit arms 9 can in this condition take a floating position along a pre-determined area of motion or free motion in their lifting direction relative to the lifting mechanism, which area of motion is determined essentially by the stroke length of the lifting cylinders 41. However, due to the weight of the layer of timber, the lifting cylinders 41 are not able to lift the deposit arms 9, and the said lifting cylinders remain in their lower condition. As a consequence, the deposit arms 9 are located at essentially the same height and they are driven in this case through the influence each of its lifting mechanism 30 in a common lowering motion downwards in order to deposit the layer of timber onto the stack of timber 13.

If Figure 2 is studied in more detail it should become clear that the uppermost rear edge of the stack of timber 13 is not linear in the horizontal plane: it bends upwards such that what is seen in the drawing as the right end of the stack of timber is somewhat higher than the left. As the support plane 5 continues its downwards lowering motion the deposit arm 9E that is seen in the drawing as being farthest to the right will make contact with the stack of timber 13 first. In a corresponding manner, other deposit arms 9A-9D seen as being positioned from left to right in the drawing will subsequently make contact with the upper rear edge of the stack of timber 13, which results in the layer that has been deposited attempting to be formed against a previously laid layer on the stack 13 and therefore to receive a similar, essentially bent, form. This bent form of the deposited layer of timber is illustrated by the dash-dot contour line 12'. Due to the coupling of motion of the release arrangement 40 with the lifting mechanism 30 each one of the said deposit arms 9 will eventually be stopped as they make contact with the upper rear edge of the stack of timber 13 while the lifting mechanism continues its downwards motion, which is illustrated with the force arrows 45 in Figure 3.

When the lifting mechanism 30 has reached a pre-determined lower position, the lifting cylinders 41 of the release arrangement 40 are reset to their holding conditions by means of the piston rod lock 42, at which they are locked in their direction of lift at the lifting mechanism 30. To be more precise, the lifting cylinders 41 can take up any freely chosen locked positions along these areas of motion that have been determined in advance. In practice, this takes place through the supply of pressurised medium to the piston rod lock 42 ceasing. After this, the deposit arms 9 of the support plane 5 are withdrawn from the stack of timber 13 through the influence of the drive mechanism 26. The deposit arms 9A-9E can in this case be located at considerably different levels of height, depending on the position at which they have been stopped on contact with the previously laid layer of timber onto the stack 13 during their downwards motion. Before the support plane 5, following its cyclical path of motion, is displaced up to a position for the reception of a new layer of pieces of timber in association with the output end 3 of the input transporter 1, the lifting cylinders 41 of the release arrangement 40 are reset such that they are positioned in their lower transport condition (withdrawn piston roads) whereby the deposit arms 9A-9E will be positioned at the same level of height. The invention provides an arrangement for the transfer of layers of timber from an input transporter to a stacking table that can be raised and lowered that will be self-adjusting with respect to shape-based faults that can arise during the formation of a stack of timber.

The invention is not limited to that which has been described above and shown in the drawings: it can be changed and modified in several different ways within the scope of the innovative concept defined by the attached patent claims.

## Claims

1. An arrangement for the transfer of layers of pieces of timber from an input transporter (1) to a stacking table (10) that can be raised and lowered in order to form a stack of timber (13), comprising a number of support planes (5) that are mobile in a cyclical path, each one of which consists of
- a number of deposit arms (9) lying next to each other and that are arranged to be brought by a drive mechanism (26) to a common synchronous motion forwards and backwards from the stacking table each along a rail (11) that is arranged such that it can be pivoted around a pivot point (20),
- a lifting mechanism (30) for the raising and lowering of the free ends of said rail (11) and with which lifting mechanism the deposit arms (9) are able to pivot individually around the pivot point (20) and through which motion a collected layer of a number of pieces of timber that has been pre-determined can be lifted and displaced in, over and down onto the stacking table and backwards such that the deposit arms are withdrawn from the stacking table while the layer of timber is being deposited from the support plane (5) to the stacking table (10), **characterised in that** each support plane comprises further,
- a release arrangement (40) arranged at each deposit arm (9) and comprising a lifting cylinder (41) with an associated piston rod lock (42), said piston rod lock forming a reset means (42) by which the release arrangement (40) can be driven between a free tensioned condition and a locked transport condition,
wherein the lifting cylinder (41) with the piston rod lock (42) is coupled in a manner that transfers motion between the free end of said rail (11) and a free end of said-lifting mechanism (26),
whereby, when reset, into its free tensioned condition the release arrangement (40) allows a deposit arm (9) to "float" along an area of motion, determined in advance, in its direction of lift relative to the lifting mechanism (30), and to be stopped during its lowering motion when it makes contact with pieces of timber in a previously laid layer on the stacking table (10) at the same time as the lifting mechanism (30) can continue its downwards motion,
whereby, when the release arrangement (40) is set into its locked transport condition, the deposit arm (9) is locked in its direction of lowering relative to the lifting mechanism (30).

2. The arrangement according to claim 1, whereby the release arrangement (40) is designed to take up, via the reset means (42), the transport condition at a freely chosen position along an area of motion that has been pre-determined within which a deposit arm (9) can "float".

3. The arrangement according to any one of claims 1-2, whereby the release arrangement (40) is arranged to take the transport condition when the support plane (5), following its cyclical path, has been driven to an upper position for the loading of pieces of timber from the input transporter (1).

4. The arrangement according to claim 3, whereby the release arrangement (40) is arranged to take the transport condition when the deposit arms (9) have been, through the influence of the drive mechanism (26), withdrawn from the stack of timber (13).

5. The arrangement according to any of the claims 1-4, whereby the area of motion of the deposit arm (9) relative to the lifting mechanism (30) is defined by the stroke length of the lifting cylinder (41).

6. The arrangement according to any one of claims 1-5, whereby the pressure of the medium that is led into a positive side of the lifting cylinder (41) is so selected that when the deposit arm (9) is not under load, i.e. when it does not carry a load of pieces of timber, the lifting cylinder offers a lifting power that is sufficient to lift the deposit arm to an upper end position relative to the lifting mechanism (30).

7. The arrangement according to any one of claims 1-6, whereby the lifting cylinder (41) with piston rod locking is coupled in a manner that transfers motion between the free end of said rail (11) and the free end of an excentric arm (35) that is a component of the lifting mechanism (30).

## Patentansprüche

1. Vorrichtung für die Zuführung von Schichten von Holzstücken von einem Zufuhrtransporter (1) zu einem zur Bildung eines Holzstapels (13) anhebbaren und absenkbaren Stapeltisch (10), umfassend eine Anzahl von Abstützebenen (5), die in einem zyklischen Pfad beweglich sind, von denen jede aus einer
- Anzahl von Ablegearmen (9) besteht, die nebeneinander liegen und die dazu ausgelegt sind, durch eine Antriebseinheit (26) in eine gemeinsame synchrone Bewegung vorwärts und rückwärts vom Stapeltisch jeweils entlang einer Schiene (11) gebracht zu werden, die um einen Drehpunkt (20) drehbar angeordnet ist,
- eine Hubeinrichtung (30) zum Anheben und Absenken der freien Enden der Schiene (11), und mit welcher Hubeinrichtung die Ablegearme (9) im Stande sind, einzeln um den Drehpunkt (20) zu drehen, und durch welche Bewegung eine eingesammelte Schicht einer vorbestimmten Anzahl von Holzstücken in, über und hinunter auf den Stapeltisch und rückwärts derart angehoben und verschoben werden kann, dass die Ablegearme dem Stapeltisch entnommen werden, während die Holzschicht von der Abstützebene (5) auf dem Stapeltisch (10) abgeladen wird, **dadurch gekennzeichnet, dass** jede Abstützebene ferner umfasst
- eine an jedem Ablegearm (9) angeordnete und einen Hubzylinder (41) mit einer verbundenen Kolbenstangenverriegelung (42) umfassende Freigabevorrichtung (40), welche Kolbenstangenverriegelung ein Rückstellmittel (42) bildet, mit welchem die Freigabevorrichtung (40) zwischen einem freien gespannten Zustand und einem verriegelten Transportzustand gefahren werden kann,
wobei der Hubzylinder (41) mit der Kolbenstangenverriegelung (42) auf eine Weise gekoppelt ist, die eine Bewegung zwischen dem freien Ende der Schiene (11) und einem freien Ende der Hubeinrichtung (26) überträgt, wobei die Freigabevorrichtung (40) bei Rückstellung in ihren freien gespannten Zustand ermöglicht, dass ein Ablegearm (9) entlang eines vorbestimmten Bewegungsbereichs in seiner Hubrichtung relativ zur Hubeinrichtung (30) "schwebt" und während seiner Absenkbewegung zum Stillstand gebracht wird, wenn er mit Holzstücken in einer vorher gelegten Schicht an dem Stapeltisch (10) Kontakt herstellt, wobei gleichzeitig die Hubeinrichtung (30) ihre Abwärtsbewegung fortsetzen kann,
wobei der Ablegearm (9), wenn die Freigabevorrichtung (40) in ihren verriegelten Transportzustand gebracht wird, in seiner Absenkrichtung relativ zur Hubeinrichtung (30) verriegelt wird.

2. Vorrichtung nach Anspruch 1, wobei die Freigabevorrichtung (40) über das Rückstellmittel (42) dazu ausgelegt ist, den Transportzustand an einer freigewählten Position entlang eines vorbestimmten Bewegungsbereichs, innerhalb dessen ein Ablegearm (9) "schweben" kann, aufzunehmen.

3. Vorrichtung nach einem der Ansprüche 1-2, wobei die Freigabevorrichtung (40) dazu ausgelegt ist, den Transportzustand aufzunehmen, wenn die ihrem zyklischen Pfad folgende Abstützebene (5) in eine obere Position zum Laden von Holzstücken aus dem Zufuhrtransporter (1) gefahren worden ist.

4. Vorrichtung nach Anspruch 3, wobei die Freigabevorrichtung (40) dazu ausgelegt ist, den Transportzustand aufzunehmen, wenn die Ablegearme (9) durch den Einfluss der Antriebseinheit (26) dem Holzstapel (13) entnommen worden sind.

5. Vorrichtung nach einem der Ansprüche 1-4, wobei der Bewegungsbereich des Ablegearms (9) relativ zur Hubeinrichtung (30) durch die Hublänge des Hubzylinders (41) definiert ist.

6. Vorrichtung nach einem der Ansprüche 1-5, wobei der in eine positive Seite des Hubzylinders (41) eingeführte Druck des Mediums so ausgewählt wird, dass der Hubzylinder, wenn der Ablegearm (9) nicht unter Last steht, d.h. wenn er keine Ladung von Holzstücken trägt, eine Hubkraft bietet, die ausreichend ist, um relativ zur Hubeinrichtung (30) den Ablegearm in eine obere Endposition zu heben.

7. Vorrichtung nach einem der Ansprüche 1-6, wobei der Hubzylinder (41) mit einer Kolbenstangenverriegelung auf eine Weise gekoppelt ist, die eine Bewegung zwischen dem freien Ende der Schiene (11) und dem freien Ende eines Exzenterarms (35), welcher ein Bauteil der Hubeinrichtung (30) ist, überträgt.

## Revendications

1. Dispositif pour le transfert de couches de morceaux de bois d'un transporteur d'entrée (1) vers une table d'empilage (10) pouvant être soulevée et abaissée pour former un empilement de bois (13), comprenant un certain nombre de plans de support (5) qui sont mobiles dans un trajet cyclique, dont chacun est constitué
- d'un nombre de bras de dépôt (9) disposés l'un à côté de l'autre et qui sont agencés pour être amenés par un mécanisme d'entraînement (26) à un mouvement synchrone commun vers l'avant et vers l'arrière à partir de la table d'empilage le long d'un rail (11) qui est agencé si bien qu'il peut être pivoté autour d'un point de pivotement (20),
- un mécanisme de levage (30) pour lever et abaisser les extrémités libres dudit rail (11), et mécanisme de levage avec lequel les bras de dépôt (9) sont capables de pivoter individuellement autour d'un point de pivotement (20), et mouvement par lequel une couche collectée d'un nombre de morceaux de bois qui a été prédéterminé peut être soulevée et déplacée dans, sur et vers le bas de la table d'empilage et vers l'arrière si bien que les bras de dépôt sont retirés de la table d'empilage tandis que la couche de bois est déposée depuis le plan de support (5) à la table d'empilage (10), **caractérisé en ce que** chaque plan de support en outre comprend,
- un dispositif de libération (40) agencé à chaque bras de dépôt (9) et comprenant un cylindre de levage (41) avec un verrouillage de tige de piston (42) associé, ledit verrouillage de tige de piston formant un moyen de remise à l'état initial (42) par lequel le dispositif de libération (40) peut être entraîné entre une condition de tension libre et une condition de transport verrouillée, dans lequel le cylindre de levage (41) avec le verrouillage de tige de piston (42) est couplé d'une manière qui transfère un mouvement entre l'extrémité libre dudit rail (11) et l'extrémité libre dudit mécanisme de levage (26),
lors de la remise à l'état initial à sa condition de tension libre, le dispositif de libération (40) permet à un bras de dépôt (9) de "flotter" le long d'une zone de mouvement déterminée à l'avance, dans sa direction de soulèvement par rapport au mécanisme de levage (30), et d'être arrêté pendant son mouvement d'abaissement lorsqu'il entre en contact avec des pièces de bois dans une couche préalablement posée sur la table d'empilage (10) en même temps que le mécanisme de levage (30) peut continuer son mouvement vers le bas,
lorsque le dispositif de libération (40) est mis dans sa condition de transport verrouillée, le bras de dépôt (9) est verrouillée dans sa direction d'abaissement par rapport au mécanisme de levage (30).

2. Dispositif selon la revendication 1, dans lequel le dispositif de libération (40) est conçu pour prendre, par l'intermédiaire des moyens de remise à l'état initial (42), la condition de transport dans une position librement choisie le long d'une zone de déplacement qui a été prédéterminée et à l'intérieur de laquelle un bras de dépôt (9) peut "flotter".

3. Dispositif selon l'une quelconque des revendications 1 à 2, dans lequel le dispositif de libération (40) est agencé pour prendre la condition de transport lorsque le plan de support (5), suivant son trajet cyclique, a été amené à une position supérieure pour le chargement de morceaux de bois venant du transporteur d'entrée (1).

4. Dispositif selon la revendication 3, dans lequel le dispositif de libération (40) est agencé pour prendre la condition de transport lorsque les bras de dépôt (9) ont été retirés de l'empilement de bois (13) sous l'influence du mécanisme d'entraînement (26).

5. Dispositif selon l'une quelconque des revendications 1 à 4, dans lequel la zone de déplacement du bras de dépôt (9) par rapport au mécanisme de levage (30) est définie par la longueur de course du cylindre de levage (41).

6. Dispositif selon l'une quelconque des revendications 1 à 5, dans lequel la pression du milieu qui est guidé dans un côté positif du cylindre de levage (41) est choisie si bien que lorsque le bras de dépôt (9) n'est pas sous charge, c'est-à-dire lorsqu'il ne porte pas une charge de morceaux de bois, le cylindre de levage offre une puissance de levage suffisante pour soulever le bras de dépôt jusqu'à une position d'extrémité supérieure par rapport au mécanisme de levage (30).

7. Dispositif selon l'une quelconque des revendications 1 à 6, dans lequel le cylindre de levage (41) avec le verrouillage de tige de piston est couplé de manière à transférer un mouvement entre l'extrémité libre dudit rail (11) et l'extrémité libre d'un bras excentrique (35) qui est un composant du mécanisme de levage (30).
